# EUROPÄISCHE PATENTANMELDUNG

(11) **EP 3 686 097 A2**
(43) Veröffentlichungstag der Anmeldung: **29.07.2020**
(21) Anmeldenummer: 20152804.9
(22) Anmeldetag: 21.01.2020
(51) Int. Cl.: B62J 9/10, B62J 9/12, B62K 19/16, B62K 7/00

(54) **VERKLEIDUNGSELEMENT FÜR FAHRRADRAHMENELEMENT**

(30) Priorität: 24.01.2019 DE 202019000389 U
(71) Anmelder: RTI Sports GmbH, 56070 Koblenz (DE)
(72) Erfinder: RASCHE, Johannes,, 64285 Darmstadt (DE); GRAEVE, Arndt, 56072 Koblenz (DE)
(74) Vertreter: dompatent von Kreisler Selting Werner - Partnerschaft von Patent- und Rechtsanwälten mbB

(57) **Zusammenfassung**

Ein Verkleidungselement, das insbesondere aus Partikelschaum hergestellt ist oder Partikelschaum aufweist, besteht insbesondere aus mindestens zwei Verkleidungsteilen (40, 42). Die Verkleidungsteile (40, 42) decken im montierten Zustand ein Oberrohr (16), ein Sattelrohr (18), ein Unterrohr (20), ein Lenkerrohr (22) und/oder ein Tretlagergehäuse (24) ab.

## Beschreibung

Die Erfindung betrifft ein Verkleidungselement für Fahrradrahmenelemente, insbesondere für Fahrradrahmenelemente eines Lastenfahrrads.

Der Fahrradrahmen herkömmlicher Fahrräder weisen zumindest ein Sattelrohr, ein Oberrohr und ein Unterrohr auf. Das Sattelrohr, das zur Aufnahme des Sattelstützrohrs dient, ist mit einem Tretlagergehäuse verbunden. Das Tretlagergehäuse ist ferner mit dem Unterrohr verbunden. Das Oberrohr und das Unterrohr sind gegebenenfalls über ein Gabelrohr miteinander verbunden. In das Tretlagergehäuse integriert oder in einem gesonderten Gehäuse kann bei Elektrofahrrädern oder sogenannten Pedilecs ein Elektromotor vorgesehen sein. Je nach Ausgestaltung des Fahrrads sind auch andere Fahrradrahmen bekannt. Eine Besonderheit der Fahrradrahmen besteht bei Lastenrädern. Hierbei sind die Fahrradrahmen derart ausgestaltet, dass die Fahrradrahmen zusätzlich ein Tragelement zur Aufnahme eines Lastenaufnahmebehälters aufweisen. Diese sind unterschiedlich ausgestaltet je nachdem, ob es sich bei den Lastenrädern beispielsweise um einspurig oder zweispurig ausgebildete Lastenräder handelt. Mit Hilfe von Lastenrädern ist es möglich, Lasten wie Güter oder auch Personen zu befördern.

Aufgabe der Erfindung ist es Verkleidungselemente für Fahrradrahmenelement insbesondere eines Lastenfahrrads zu schaffen.

Die Lösung der Aufgabe erfolgt erfindungsgemäß durch die Merkmale des Anspruchs 1, 4 und/oder 10.

Die erfindungsgemäßen Verkleidungselemente sind insbesondere für Fahrradrahmenelemente geeignet. Entsprechend ausgestaltete erfindungsgemäße Verkleidungselemente sind jedoch insbesondere auch für motorisierte Zweiräder wie Roller, Motorräder und dergleichen geeignet.
In der ersten bevorzugten Ausführungsform eines erfindungsgemäßen Verkleidungselements für Fahrradrahmenelemente, insbesondere eines Lastenfahrrads, ist das Verkleidungselement aus einem im Wesentlichen leichten Kunststoff hergestellt. Hierdurch ist es möglich, einerseits Teile des Fahrradrahmens zu verkleiden, andererseits jedoch das Gesamtgewicht des Fahrrads nicht wesentlich zu erhöhen. Als besonders geeignetes Material zur Herstellung derartiger Verkleidungselemente ist expandiertes Polypropylen (EPP) geeignet. Ferner ist auch expandiertes Polyethylen (EPE), expandiertes Polystyrol (EPS) und/oder expandiertes thermoplastisches Polyurethan (E-TPU) oder Kombination dieser Materialen geeignet. Besonders geeignet ist es zumindest als Grundmaterial für das Verkleidungselement Partikelschäume zu verwenden. Derartige Materialen können an der Außenseite beispielsweise mit einer glatten Deckschicht versehen sein, ob insbesondere gut gereinigt werden zu können, um die Oberfläche gut gestalten zu können und dergleichen.

Derartige Verkleidungselemente stellen einerseits ein designerisches Merkmal dar und können als Werbefläche oder dergleichen dienen. Insbesondere stellen derartige Verkleidungselemente jedoch ein Schutzelement für Fahrradrahmenelemente dar. So können beispielsweise bei einem Sturz oder beim Umfallen des Fahrrads Fahrradrahmenelemente durch das erfindungsgemäße Verkleidungselement geschützt werden. Dies ist beispielsweise von besonderem Vorteil, wenn das Verkleidungselement empfindliche Bauteile wie einen Elektromotor umgibt, so dass dieser vor Beschädigungen geschützt ist. Ferner können durch derartige Verkleidungselemente Schweißnähte oder andere Verbindungsstellen abgedeckt werden. Hierdurch ist eine kostengünstigere Herstellung möglich, da an die optische Qualität der Schweißnähte und dergleichen geringere Anforderungen gestellt sind.

Bei einer weiteren unabhängigen Erfindung ist das Verkleidungselement für Fahrradrahmenelemente insbesondere eines Lastenfahrrads derart ausgebildet, dass es zumindest zwei miteinander verbindbare Verkleidungsteile aufweist. Die Verkleidungsteile sind hierbei in bevorzugter Weiterbildung der Erfindung aus dem vorstehend beschriebenen Material hergestellt oder weisen dieses auf. Durch das Vorsehen eines mehrteiligen, insbesondere zweiteiligen Verkleidungselements kann dieses auf einfache Weise mit dem Fahrradrahmenelement verbunden werden. Hierzu sind insbesondere Halteelemente vorgesehen, um ein vorzugsweise lösbares Verbinden der einzelnen Verkleidungsteile miteinander zu realisieren. Bei den Halteelementen kann es sich beispielsweise um Rastelemente oder dergleichen handeln.

Besonders bevorzugt ist es, dass zumindest zwei der Verkleidungsteile Anlageflächen aufweisen. Zur Montage liegen die beiden Verkleidungsteile an den Anlageflächen an. Insbesondere kann hierdurch auch eine Abdichtung zwischen den beiden Verkleidungsteilen erfolgen, wobei selbstverständlich auch mehr als zwei Verkleidungsteile vorgesehen sein können. Gegebenenfalls kann im Bereich der Anlagefläche eine Dichtung angeordnet sein, um insbesondere das Eindringen von Wasser zu vermeiden. Besonders bevorzugt ist es, dass im Bereich von Anlageflächen Halteelemente vorgesehen sind, um insbesondere in diesem Bereich eine zuverlässige Verbindung der Teile sicherzustellen. Die Halteelemente sind vorzugsweise derart ausgebildet, dass sie auf einfache Weise lösbar sind. Hierdurch ist es möglich, eines der Verkleidungsteile auf einfache Weise zu lösen, um beispielsweise innerhalb der Verkleidungselemente angeordnete Kabel, Bowdenzüge oder dergleichen zu warten oder auszuwechseln. Bevorzugt ist es als Halteelemente insbesondere stiftförmige Halteelemente wie Schrauben vorzusehen. Hierzu ist es ferner bevorzugt, dass insbesondere im Bereich der Anlageflächen Durchgangsöffnungen vorgesehen sind, in denen die stiftförmigen Halteelemente wie Schrauben eingesetzt werden können. Hierbei können zur Fixierung Muttern vorgesehen sein, die beispielsweise auch bereits bei der Herstellung der Verkleidungsteile in diese eingegossen werden können oder nachträglich in Vertiefungen angeordnet werden. Durch das Vorsehen von insbesondere als Schrauben ausgebildeten Halteelementen ist auf einfache Weise möglich, ein Verkleidungsteil zu lösen.

Vorzugsweise sind die einzelnen Verkleidungsteile derart ausgebildet, dass diese Elemente des Fahrradrahmens oder des Rahmens eines anderen Fahrzeugs umschließen. Vorzugsweise erfolgt die Verbindung der insbesondere zwei Verkleidungsteile derart, dass die Verkleidungsteile ausschließlich miteinander verbunden werden und eine Verbindung über Halteelemente an einem Rahmenelement nicht erforderlich ist. Die Verbindung zu einem Rahmenelement erfolgt in dieser bevorzugten Ausführungsführ ausschließlich aufgrund des Umschließens des Rahmenelements. Es ist somit nicht erforderlich, am Rahmenelement Halterungen oder dergleichen zur Aufnahme der Verbindungselemente vorzusehen. Dies hat insbesondere auch den Vorteil, dass Verbindungselemente nachgerüstet werden können, ohne dass eine Veränderung von Rahmenelementen erforderlich ist.

In bevorzugter Ausführungsform ist das aus insbesondere mehreren Verkleidungsteilen hergestellte Verkleidungselement im montierten Zustand derart angeordnet, dass es ein Tretlagergehäuse und/oder ein Motorgehäuse eines Elektromotors und/oder ein Sattelrohr und/oder ein Unterrohr und/oder ein Oberrohr und/oder ein Lenkrohr und/oder Kabelelemente abdeckt. Bei einem Lenkrohr handelt es sich um ein Rahmenelement eines Lastenrades, das insbesondere zur Aufnahme eines mit dem Lenker verbundenen Rohrelements vorgesehen ist. Das Lenkrohr ist ferner insbesondere mit dem Unterrohr und/oder dem Oberrohr des Fahrradrahmens verbunden. In Fahrtrichtung vor dem Lenkrohr ist bei einer derartigen bevorzugten Ausführungsform eines Fahrradrahmens ein Lastenaufnahmebehälter angeordnet.

Mit den Fahrradrahmenelementen in Fahrtrichtung vor dem Lastenaufnahmebehälter kann ein Gabelrohr des Fahrradrahmens zur Aufnahme der Fahrradgabel angeordnet sein. In besonders bevorzugter Ausführungsform ist das Verkleidungselement zumindest zweiteilig ausgebildet und wird von beiden Seiten des Rahmens derart angeordnet, dass es sowohl das Sattelrohr, das Unterrohr, das Oberrohr, das Tretlagergehäuse sowie das Motorgehäuse abdeckt. Bei einem Lastenrad ist es ferner bevorzugt, dass auch das Lenkrohr von den mindestens beiden Verkleidungsteilen abgedeckt ist. Hierdurch ist es möglich, den gesamten Fahrradrahmen zu schützen. Ferner ist eine große Fläche, die für Werbung, etc. geeignet ist, geschaffen. Des Weiteren ist es möglich, bei einer derartigen Verkleidung den Rahmen selbst kostengünstiger herzustellen, da beispielsweise Schweißnähte, Verbindungselemente und dergleichen nicht sichtbar sind.

Besonders vorteilhaft ist es, dass innerhalb der Verkleidungselemente Kabelelement angeordnet werden können. Bei den Kabelelementen handelt es sich beispielsweise um Kabel, Kabelkanäle, Halterungen für die Kabel und dergleichen. Aufgrund der bevorzugten lösbaren Verbindung der Verkleidungsteile sind beispielsweise zur Wartung Kabel und dergleichen auf einfache Weise zugänglich.

Bei einer weiteren unabhängigen Erfindung handelt es sich um ein Verkleidungselement für Fahrradrahmenelemente eines Lastenfahrrads. Der Fahrradrahmen des Lastenfahrrads weist ein Tragelement zur Aufnahme eines Lastenaufnahmebehälters auf. Insbesondere ist das Tragelement in besonders bevorzugter Ausführungsform in Fahrtrichtung vor dem Benutzer insbesondere vor dem Lenker eines Benutzers angeordnet. Das Tragelement verbindet somit beispielsweise ein Unterrohr und/oder ein Lenkrohr des Fahrradrahmens mit einem Gabelrohr des Fahrradrahmens. Bei dieser Erfindung weist das Verkleidungselement mindestens ein Verkleidungsteil auf, das mit dem Tragelement verbindbar ist bzw. in montiertem Zustand verbunden ist. Beispielsweise kann das Tragelement zwar im Wesentlichen parallel zueinander verlaufende Rohrelemente aufweisen, wobei das mindestens eine Verkleidungsteil sodann zwischen den beiden Rohrelementen angeordnet ist. In diesem Bereich ist es ferner möglich, ein Batterieelement vorzusehen. Das Verkleidungselement dient somit in besonders bevorzugter Ausführungsform in montiertem Zustand zur Abdeckung des Batterieelements. Ferner ist es bevorzugt durch ein derartiges Verkleidungselement, Kabelelemente abzudecken sowie gegebenenfalls Teile des Tragelements oder auch das vollständige Tragelement. Auch bei dieser Erfindung ist es wiederum bevorzugt, dass das Verkleidungselement aus dem vorstehend beschriebenen Material hergestellt ist bzw. dieses aufweist.

In besonders bevorzugter Weiterbildung der einzelnen Erfindungen können diese miteinander kombiniert werden.

Besonders bevorzugt ist es bei den unterschiedlichen Ausführungsformen, dass das Verkleidungsteil derart ausgestaltet ist, dass hierdurch Lüftungskanäle ausgebildet sind. Diese können insbesondere zum Kühlen des Elektromotors und/oder des Batterieelements vorgesehen sein.

Bei der Ausgestaltung des Verkleidungselements aus mindestens zwei miteinander verbindbaren Verkleidungsteilen können diese ferner derart ausgebildet sein, dass Hohlräume oder Fächer vorgesehen sind. Diese können beispielsweise zum Verstauen von Werkzeug, einem Fahrradschloss oder dergleichen dienen. Derartige Hohlräume sind in bevorzugter Weiterbildung mit einem Deckel oder dergleichen verschließbar.

Die unterschiedlichen, vorstehend insbesondere anhand eines Fahrrads beschriebenen Verkleidungsteile und Verkleidungselemente sind auch für andere Anwendungsgebiete wie beispielsweise Motorroller, Motorräder, E-Bikes und dergleichen geeignet.

Nachfolgend werden die Erfindungen anhand bevorzugter Ausführungsformen unter Bezugnahme auf die anliegenden Zeichnungen näher erläutert.

Es zeigen:
- Fig. 1: eine perspektivische Seitenansicht eines Lastenfahrrads mit montierten Verkleidungselementen,
- Fig. 2: eine der Figur 1 entsprechende perspektivische Ansicht eines Lastenfahrrads vor der Montage der Verkleidungselemente,
- Fign. 3 und 4: perspektivisch Ansichten eines Rahmens eines Lastenfahrrads zusammen mit einer weiteren bevorzugten Ausführungsform eines Verkleidungselements und
- Fign. 5 bis 7: perspektivische Ansichten der beiden in den Figuren 3 und 4 montierten dargestellten Verkleidungsteile.

In den dargestellten Ausführungsbeispielen sind die Erfindungen an Hand eines Lastenrades dargestellt und werden im Folgenden beschrieben.

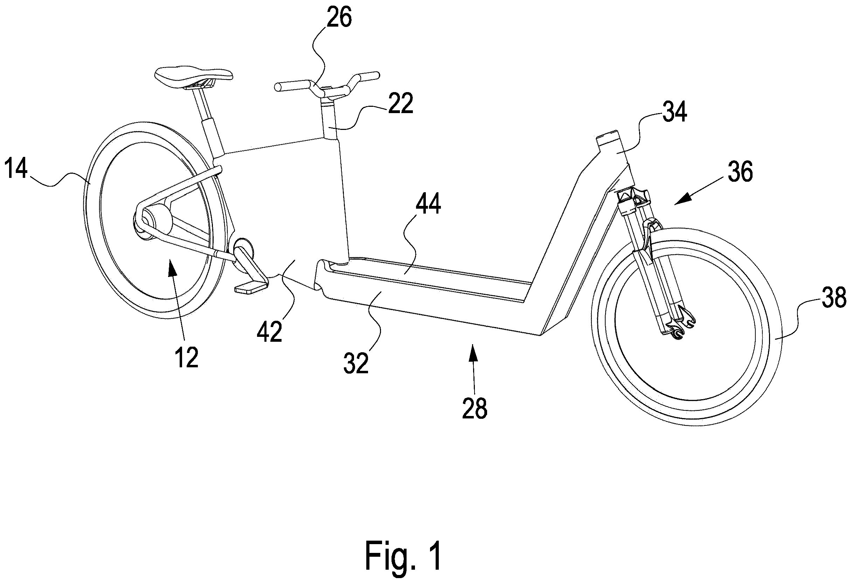

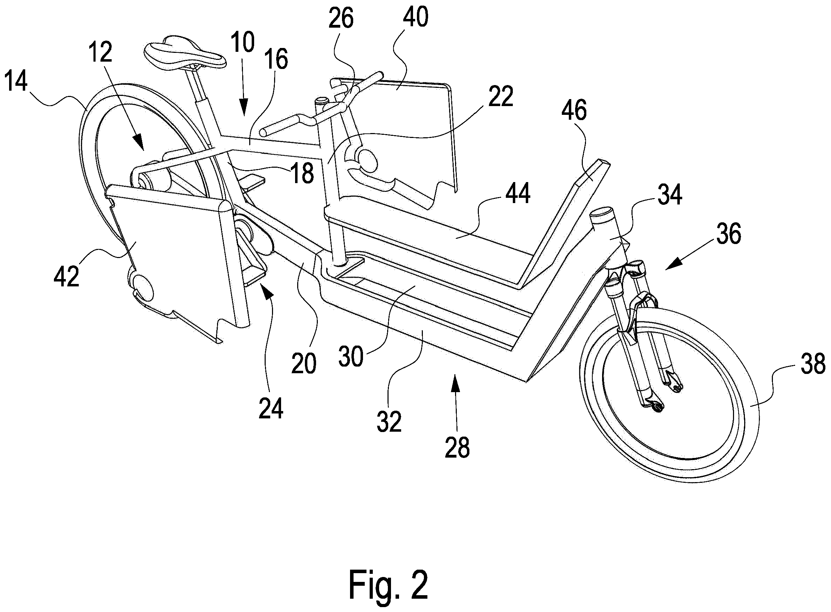

Das Lastenrad (Figuren 1 und 2) weist einen Fahrradrahmen 10 auf, der mit einem Hinterbau 12 verbunden ist. Der Hinterbau 12 trägt ein Hinterrad 14. Das Rahmenelement weist im dargestellten Ausführungsbeispiel ein Oberrohr 16, ein Sattelrohr 18, ein Unterrohr 20 sowie ein Lenkrohr 22 auf. Das Sattelrohr 18 sowie das Unterrohr 20 sind mit einem Tretlager- und Motorgehäuse 24 verbunden. In dem Gehäuse 24 ist neben dem Tretlager ein Elektromotor zur Antriebsunterstützung angeordnet.

Das Lenkrohr dient zur schwenkbareren Aufnahme eines mit einem Lenker 26 verbundenen Rohrelements. Das untere Rohr 20 ist im dargestellten Ausführungsbeispiel mit einem Tragelement 28 verbunden, das zum Tragen eines nicht dargestellten Lastenaufnahmebehälters dient. Das Tragelement 28 weist im dargestellten Ausführungsbeispiel zwei im Wesentlichen parallel zueinander angeordnete rohrförmige Elemente 30, 32 auf, die abgewinkelt sind und an ihrem oberen Ende mit einem Gabelrohr 34 verbunden sind. In dem Gabelrohr 34 ist der Gabelschaft eines eine Gabel aufweisenden Vorbaus 36 schwenkbar angeordnet, wobei eine Verbindung mit dem Lenker 26 nicht dargestellt ist. Der Vorbau 36 trägt ein Vorderrad 38.

Zwischen den beiden rohrförmigen Elementen 30, 32 des Tragelements 28 ist insbesondere ein Batterieelement und gegebenenfalls ein Zusatzbatterieelement zum Antreiben des in dem Gehäuse 24 angeordneten Elektromotors vorgesehen.

Im dargestellten Ausführungsbeispiel ist ein erstes Verkleidungselement zur Verkleidung des Fahrradrahmens dargestellt. Dieses weißt zwei Verkleidungsteile 40, 42 auf. In montiertem Zustand (Fig. 1) sind die beiden Verkleidungsteile 40, 42 derart angeordnet, dass sie das Oberrohr 16, das Sattelrohr 18, das Unterrohr 20, das Lenkrohr 22 sowie auch das Tretlager- und Motorgehäuse 24 abdecken. Hierdurch sind die entsprechenden Bauteile geschützt.

Ferner sind im montiertem Zustand nach außen weisende Oberflächen der Verkleidungselemente 40, 42 beispielsweise zum Aufbringen von Schriftzügen, Werbung oder dergleichen geeignet. Zwischen den beiden Verkleidungsteilen 40, 42 können auf einfache Weise Kabel oder dergleichen angeordnet werden.

Über Halteelemente wie Rastelemente können die beiden Verkleidungsteile 40, 42 lösbar miteinander verbunden sein.

Des Weiteren ist ein Verkleidungselement zur Anordnung im Bereich des Tragelements 28 dargestellt. Dieses kann aus zwei Verkleidungsteilen 44, 46 bestehen oder einstückig ausgebildet sein. Insbesondere dienen die Verkleidungsteile 44, 46 zum Abdecken von Batterieelementen, die zwischen den beiden rohrförmigen Elementen 30, 32 angeordnet sind.

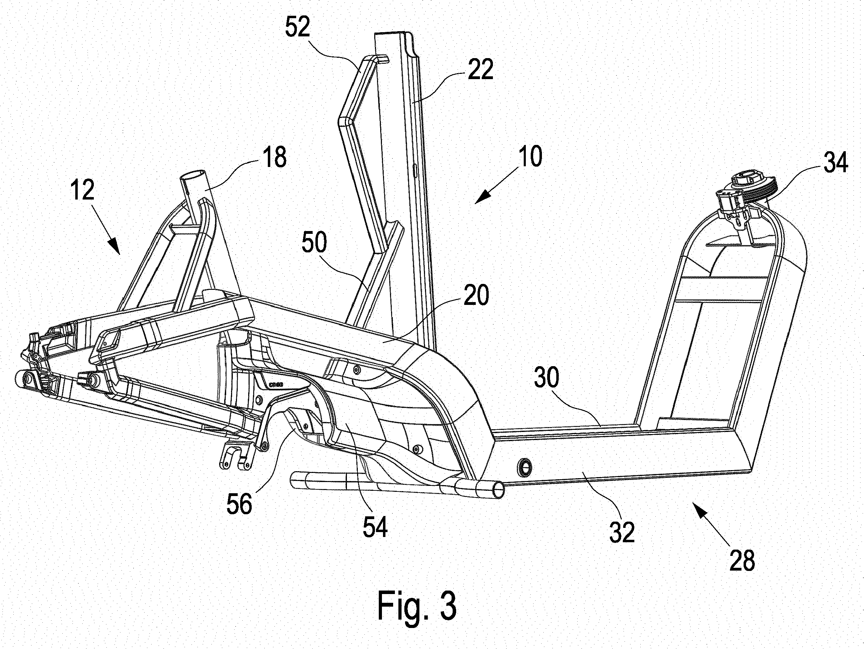

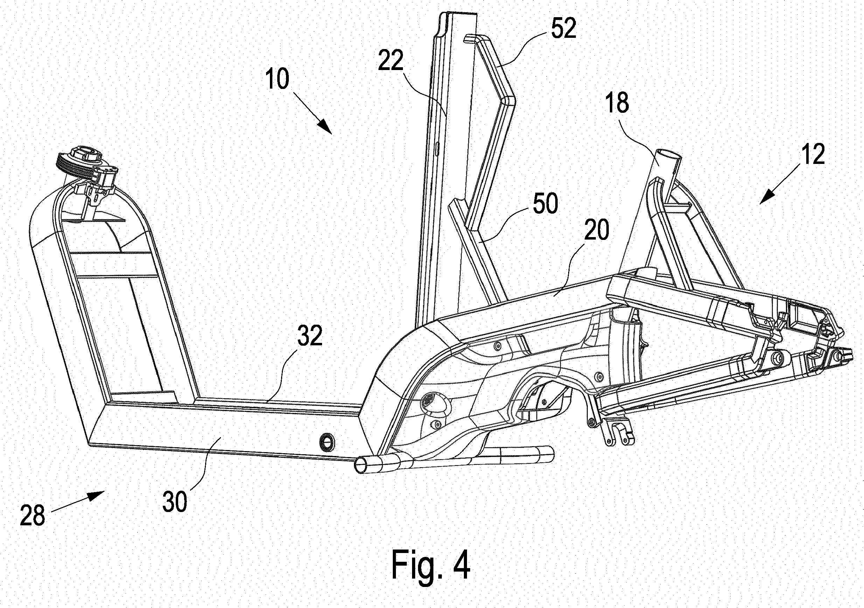

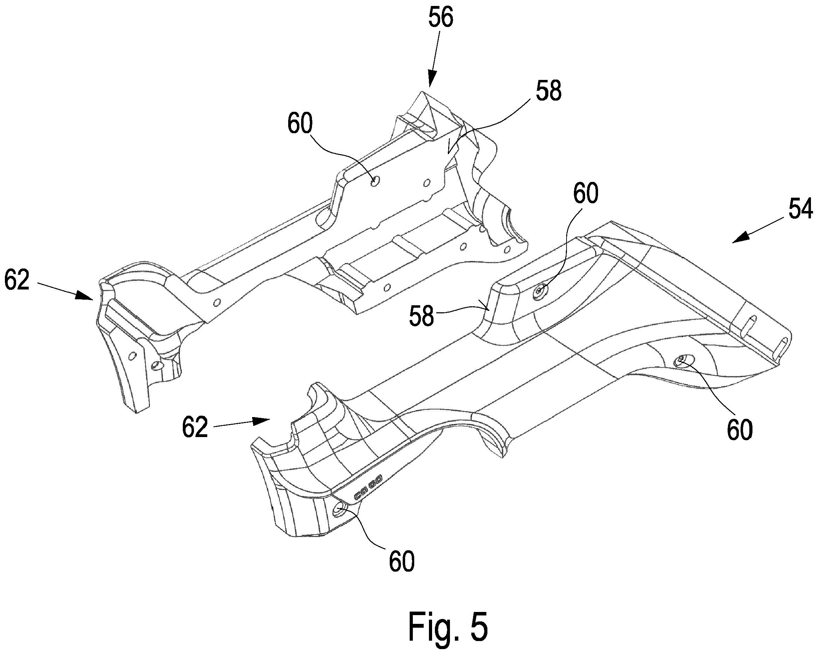

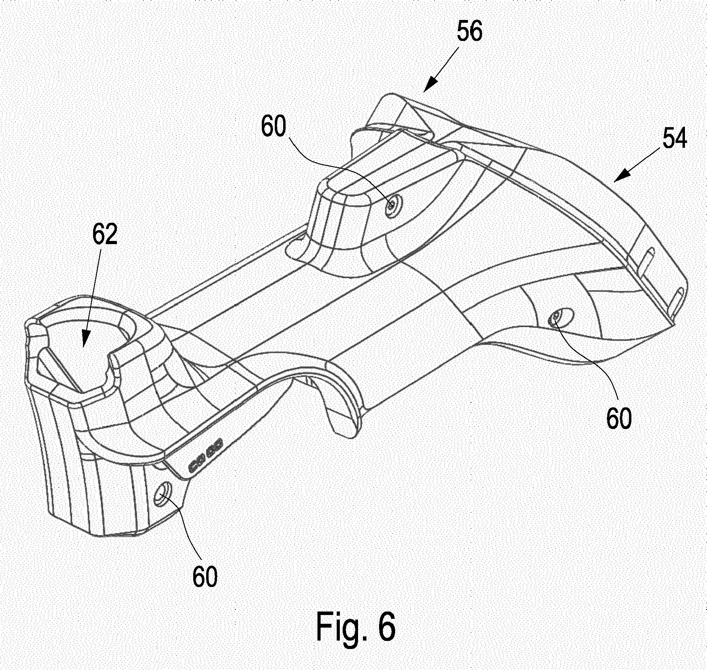

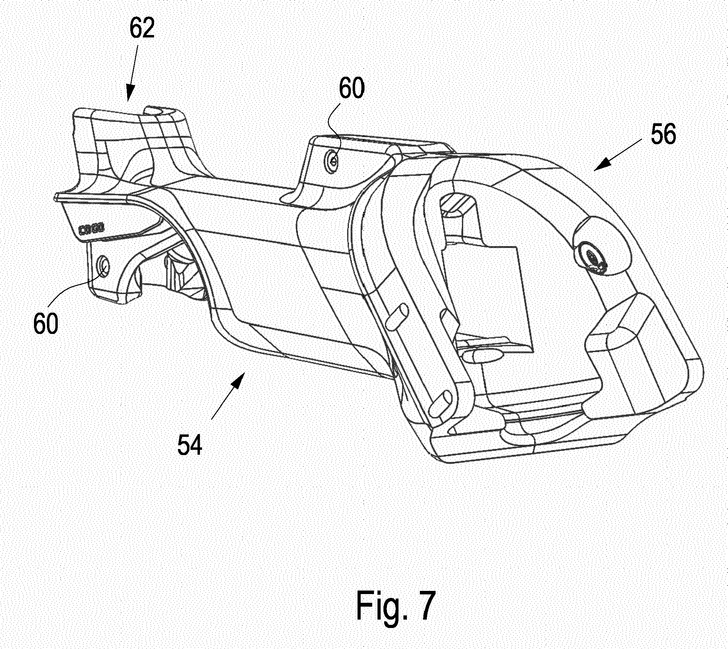

Bei dem weiteren in den Figuren dargestellten bevorzugten Ausführungsbeispiel (Figuren 3 bis 7) sind ähnliche und identische Bauteile mit denselben Bezugszeichen gekennzeichnet.

Bei dem dargestellten Fahrradrahmen 10 handelt es sich um eine weitere Ausführungsform eines Fahrradrahmens für ein Lastenrad. Ein wesentlicher konstruktiver Unterschied besteht darin, dass mit dem Lenkrohr 22 kein Oberrohr 16 verbunden ist, sondern ein vom Lenkrohr 22 schräg nach unten in Richtung des Tretlagergehäuses 24 verlaufendes Rohrelement 50. Ferner ist mit diesem Rohrelement 50 und dem Lenkrohr 22 ein als Greifelement ausgebildetes Rohrelement 52 vorgesehen. Ferner ist der Hinterbau 12 etwas anders ausgestaltet. Des Weiteren ist das Unterrohr 20 etwas anders geformt und direkt mit den rohrförmigen Elementen 30, 32 verbunden.

Wesentlich in dieser Ausführungsform ist, dass das Verkleidungselement anders ausgebildet ist und im Wesentlichen nur den Bereich des Tretlagers und des Elektromotors abdeckt. Das Verkleidungselement ist wiederum zweiteilig ausgebildet und weist zwei Verkleidungsteile 54, 56 auf. Die Verkleidungsteile 54, 56 weisen im montierten Zustand aneinander anliegende Anlageflächen 58 auf. Im Bereich der Anlageflächen 58 kann ein nicht dargestelltes Dichtelement angeordnet sein. Insbesondere im Bereich dieser Anlageflächen sind Durchgangsöffnungen 60 vorgesehen. Diese dienen zur Aufnahme von insbesondere als Schrauben oder Gewindestifte ausgebildete Halteelemente zum Verbinden der beiden Verkleidungsteile 54, 56.

Insbesondere erfolgt kein Verbinden der beiden Verkleidungsteile 54, 56 durch Halteelemente mit Teilen des Rahmens. Vielmehr weisen die Verkleidungsteile 54, 56 Ausnehmungen 62 auf, die im montierten Zustand Elemente des Fahrradrahmens wie das Sattelstützrohr 18, das Unterrohr 16 oder dergleichen umschließen.

## Patentansprüche

1. Verkleidungselement für Fahrradrahmenelemente, insbesondere eines Lastenfahrrads,
**dadurch gekennzeichnet,**
**dass** das Verkleidungselement aus Kunststoffmaterial hergestellt ist, insbesondere expandiertes Polypropylen (EPP) aufweist und besonders bevorzugt aus expandiertem Polypropylen (EPP) hergestellt ist.

2. Verkleidungselement nach Anspruch 1, **dadurch gekennzeichnet, dass** das Verkleidungselement Partikelschaum aufweist und insbesondere aus Partikelschaum hergestellt ist.

3. Verkleidungselement nach einem der Ansprüche 1 oder 2, **dadurch gekennzeichnet, dass** das Verkleidungselement expandierten Polyethylen (EPT) und/oder expandiertem Polystyrol (EPS) und/oder expandiertem thermoplastischen Polyurethan (E-TPU) aufweist oder aus diesen Materialen oder Kombination dieser Materialen hergestellt ist.

4. Verkleidungselement für Fahrradrahmenelemente, insbesondere eines Lastenfahrrads, mit zumindest zwei miteinander verbindbaren Verkleidungsteilen (40, 42; 54, 56).

5. Verkleidungselement nach Anspruch 4, **dadurch gekennzeichnet, dass** die Verkleidungsteile (40, 42) im montierten Zustand ein Tretlagergehäuse (24) und/oder ein Motorgehäuse eines Elektromotors und/oder ein Sattelrohr (18) und/oder ein Unterrohr (20) und/oder ein Oberrohr (16) und/oder ein Lenkerrohr (22) und/oder Kabelelemente abdecken.

6. Verkleidungselement nach einem der Ansprüche 4 oder 5, **dadurch gekennzeichnet, dass** die Verkleidungsteile (40, 42; 54, 56) über Halteelement, insbesondere lösbar miteinander verbunden sind.

7. Verkleidungselement nach einem der Ansprüche 4 bis 6, **dadurch gekennzeichnet, dass** die zumindest zwei Verkleidungsteile (40, 42; 54, 56) zur Verbindung Anlageflächen (58) aufweisen.

8. Verkleidungselement nach Anspruch 6 oder 7, **dadurch gekennzeichnet, dass** im Bereich der Anlageflächen (58) Halteelemente vorgesehen sind.

9. Verkleidungselement nach Anspruch 8, **dadurch gekennzeichnet, dass** im Bereich der Anlageflächen (58) Durchgangsöffnungen (60) zur Aufnahme von stiftförmigen Halteelementen, insbesondere Schrauben vorgesehen sind.

10. Verkleidungselement für ein Fahrradrahmenelement eines Lastenfahrrads, das ein Tragelement (28) zur Aufnahme eines Lastenaufnahmebehälters aufweist, wobei das Verkleidungselement mindestens ein Verkleidungsteil (44, 46) aufweist, das mit dem Tragelement verbindbar ist.

11. Verkleidungselement nach Anspruch 10, **dadurch gekennzeichnet, dass** das mindestens eine Verkleidungsteil (44, 46) in montiertem Zustand ein Batterieelement und/oder Teile des Tragelements abdeckt.
